(19) Europäisches Patentamt
European Patent Office
Office européen des brevets

(11) Publication number: **0 459 459 A1**

# (12) EUROPEAN PATENT APPLICATION

(21) Application number: **91108820.1**

(51) Int. Cl.5: **H01B 3/30**

(22) Date of filing: **29.05.91**

(30) Priority: **31.05.90 JP 141911/90**
**19.07.90 JP 189451/90**
**16.10.90 JP 276936/90**

(43) Date of publication of application:
**04.12.91 Bulletin 91/49**

(84) Designated Contracting States:
**DE FR GB**

(71) Applicant: **THE FURUKAWA ELECTRIC CO., LTD.**
**6-1, 2-chome, Marunouchi Chiyoda-ku**
**Tokyo(JP)**

(72) Inventor: **Nishiyama, Hidemi, c/o THE FURUKAWA ELEC. CO., LTD**
**6-1, 2-chome, Marunouchi, Chiyoda-ku**
**Tokyo(JP)**
Inventor: **Uchida, Hiroshi, c/o THE FURUKAWA ELEC. CO., LTD**
**6-1, 2-chome, Marunouchi, Chiyoda-ku**
**Tokyo(JP)**
Inventor: **Sakaguchi, Toyohiko, c/o THE FURUKAWA ELEC.CO.,LTD**
**6-1, 2-chome, Marunouchi, Chiyoda-ku**
**Tokyo(JP)**

(74) Representative: **Hansen, Bernd, Dr. Dipl.-Chem. et al**
**Hoffmann, Eitle & Partner Patent- und Rechtsanwälte Arabellastrasse 4 Postfach 81 04 20**
**W-8000 München 81(DE)**

## (54) Electrically insulating polyurethane resin shaped article.

(57) This invention provides an electrically insulating polyurethane resin shaped article excellent in physical properties, e.g., a refrigerant-resistant insulated wire in which an electrically insulating layer is formed on the outer circumferential surface of an electrical conductor (A), the insulating layer comprising a thermoplastic polyurethane resin (B), which is synthesized using at least one member of a polyol selected from the group consisting of poly-$\epsilon$-caprolactonepolyol and polycarbonatepolyol, a chain extender, and a diisocyanate compound as starting materials and has a shore hardness of D50 to D83, and having a coating thickness of 1.5 mm or less. Another embodiment of the shaped article excellent in physical properties of this invention is an electrically insulating resin tube comprising the above thermoplastic polyurethane resin and having a wall thickness of 1.5 mm or less.

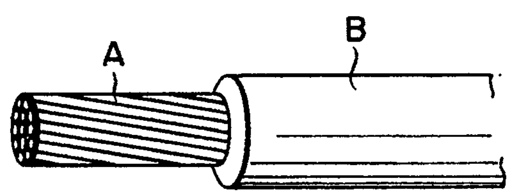


F I G. 2A

EP 0 459 459 A1

The present invention relates to an electrically insulating polyurethane resin shaped article having excellent physical properties and, more particularly, to a refrigerant-resistant insulated wire for use in wiring in a compressor of, e.g., a freezer, a refrigerator, or an air conditioner and an electrically insulating resin tube to be coated on a lead wire-corresponding portion of a magnet wire in leadless wiring of the magnet wire.

An electrically insulated wire for use in wiring in a compressor of, e.g., an air conditioner, a refrigerator, and a freezer is generally required to be satisfactory in a refrigerant resistance and an oil resistance as well as electrical and mechanical properties as an insulated wire because it is brought into contact with Fron used as a refrigerant and a lubricating oil.

A conventional insulated wire of this type (to be referred to as a refrigerant-resistant insulated wire hereinafter) has an arrangement as shown in Fig. 1. Referring to Fig. 1, a polyester-fiber braid C having a high refrigerant resistance is formed as an insulator on the outer circumferential surface of a conductor A, a polyester film D is wound once or twice on the outer circumferential surface of the braid C, and a polyester-fiber braid E is formed on the outer circumferential surface of the film D.

In the above conventional refrigerant-resistant insulated wire, however, since the plastic film D is wound on the outer circumferential surface and the braid C and E consisting of plastic fibers are formed, these film and braid easily break up when the wire is cut or stripped, i.e., in a so-called end treating process. Therefore, since the end treating process is labor intensive, a strong demand has arisen from the market for a wire which can be subjected to an end treating process performed by an automatic end treating machine.

In addition, the braid layers C and E are fluffed and removed even after wiring is completed, thereby posing a problem in that valves of a refrigerant circulating system are clogged with the removed fibers.

Furthermore, a braid formation step or a film winding step of a wire manufacturing process is low in productivity to cause a high manufacturing cost.

For the above reasons, if an insulated wire (Fig. 2A) formed by extrusion-coating a resin B having excellent physical properties, particularly excellent refrigerant resistance and abrasion resistance, on a conductor A is developed, the above problems of, e.g., the labor-intensive end treating process and the high manufacturing cost may be simultaneously solved. Therefore, various attempts have been made, but no satisfactory product has been developed.

On the other hand, requirements for the specification of an insulating tube for wire coating have been more diverse and sophisticated. In particular, a variety of high-level requirements in both quality and economy to be described below are proposed for a magnet wire coating insulating tube for use in so-called leadless wiring currently being developed.

First, an attempt for leadless wiring of a magnetic wire will be described below. Fig. 3 shows a conventional method of connecting an external input, e.g., a power source wire to a motor which has a motor coil 2 obtained by winding a magnet wire 1 and is placed in a sealed interior of a compressor 3. In this method, a terminal 6 is connected to the magnet wire, and an insulated wire 5 (to be referred to as a lead wire hereinafter) coated with an insulating material is connected to this terminal 6. The lead wire 5 is connected to an external terminal 4 provided on the compressor 3, and a power source wire is connected to the terminal 4 to supply power. In this method, however, since the number of required wiring parts is large, a parts cost is increased, and the number of steps required for a wiring process is increased, resulting in a high manufacturing cost.

Therefore, there has been proposed a so-called leadless wiring method as shown in Fig. 4 in which the number of parts required for wiring is small and a wiring process is simplified. In this wiring method, a magnet wire 1 coated with an insulating tube 7 having a suitable size is directly connected to an external terminal 4 provided on a compressor 3. In other words, this method is esteemed to be an innovative method not requiring any additional lead wire and its connection terminal. Many attempts have been made to put this leadless wiring method into practical use in, particularly, wiring of a household air conditioner and the like using a compact compressor.

A problem to be solved before the leadless wiring method is actually put into practical use is that whether the insulating tube 7 which satisfies characteristics (to be described below) required to coat a lead wire-corresponding portion of the magnet wire 1 can be economically provided.

A magnet wire generally has a conductor diameter of 0.7 to 1.05 mm and an outer diameter after coating of 0.75 to 1.2 mm, and a wiring location using the leadless wiring method is narrow and limited. A desired insulating tube, therefore, must overcome dimensional limitations imposed by a specific purpose and location of the use, particularly, a limitation with respect to the wall thickness of the tube. In addition, regardless of these dimensional limitations, the tube must have various characteristics required to coat a lead wire-corresponding portion of a magnet wire, i.e., generally predetermined levels of a damage proof, a flexibility, and a heat resistance, and predetermined levels of a refrigerant resistance and an oil resistance

when it is used in an air conditioner or the like, and must be economical.

However, no insulating tube having these characteristics with a good balance and being economical has been provided yet. For example, although an insulating tube consisting of a polyamideimide or polyimide resin has good characteristics, it is expensive and therefore is unsuitable for the economic reason. A fluoro resin also has good characteristics, but it is difficult to form the resin into a thin-walled tube such as tube having a wall thickness of 0.1 mm because the resin is poor in processing properties.

It is an object of the present invention to provide an electrically insulating resin shaped article such as a refrigerant-resistant insulated wire obtained by forming a resin molded layer on a conductor and an electrically insulating resin tube, which are excellent in physical properties such as a damage proof, a flexibility, a heat resistance, and a refrigerant resistance and are economical.

The present inventors have paid attention to a polyurethane resin which is a general material of an economical electrically insulating resin shaped article and made extensive studies to find that the electrically insulating resin shaped article achieving the above object of the present invention can be obtained by using a thermoplastic polyurethane resin synthesized from a predetermined starting materials.

An electrically insulating polyurethane resin shaped article having excellent physical properties according to the present invention is obtained by shaping a thermoplastic polyurethane resin such that the thickness of the resin is 1.5 mm to 0.1 mm, the thermoplastic polyurethane resin having a shore hardness of D50 to D83 and being synthesized by using at least one member of a polyol selected from the group consisting of poly-$\epsilon$-caprolactonepolyol and polycarbonatepolyol, a chain extender, and a diisocyanate compound as starting materials.

The shaped article of the present invention may be molded or shaped by either extrusion molding of the above thermoplastic polyurethane resin or coating and baking of a resin solution prepared by dissolving the above thermoplastic polyurethane resin in a solvent.

This invention can be more fully understood from the following detailed description when taken in conjunction with the accompanying drawings, in which:

Fig. 1 is a perspective view showing a conventional refrigerant-resistant insulated wire for use in wiring in a compressor and the like;

Fig. 2A is a perspective view showing a refrigerant-resistant insulated wire indicating one embodiment of the present invention applied for the abovementioned use;

Fig. 2B is a perspective view showing an electrically insulating resin tube indicating another embodiment of the present invention;

Fig. 3 is a schematic view showing a general method of connecting an external power source to a motor which has a coil obtained by winding a magnet wire and is located inside a compressor;

Fig. 4 is a schematic view showing a leadless wiring method of connecting an external power source to a motor which has a coil obtained by winding a magnetic wire and is located inside a compressor;

Fig. 5 is a view for explaining a varnish compatibility test; and

Fig. 6 is a view showing a manner of bending a sample in a flexibility test.

An electrically insulating polyurethane resin shaped article having excellent physical properties according to the present invention is obtained by shaping a thermoplastic polyurethane resin such that the thickness of the resin is 1.5 mm or less, the thermoplastic polyurethane resin having a shore hardness of D50 to D83 and being synthesized by using at least one member of a polyol selected from the group consisting of poly-$\epsilon$-caprolactonepolyol and polycarbonatepolyol, a chain extender, and a diisocyanate compound as starting materials. The above shaped article of the present invention is molded or shaped by using melt extrusion molding of the above thermoplastic polyurethane resin or coating and baking of a resin solution prepared by dissolving the above thermoplastic polyurethane resin in a solvent.

A specific thermoplastic polyurethane resin used in the present invention is a polyurethane resin obtained by mixing poly-$\epsilon$-caprolactonepolyol having the following chemical structures and/or polycarbonate polyol prepared by reacting carbonates such as dimethylcarbonate, dipropyl carbonate, phenylcarbonate and compounds having at least two hydroxyl group in the molecule, at least one member of a chain extender such as ethyleneglycol, 1,4-butanediol, and 1,6-hexanediol, and at least one member of a diisocyanate compound such as a 4,4'-diphenylmethanediisocyanate at a mixing ratio at which the shore hardness of the resin obtained becomes D50 to D83, and performing a polyaddition reaction at a predetermined temperature and time. The examples of the above polycarbonate polyol are
poly(hexamethylenecarbonate)polyol,
poly(cyclohexamethylenecarbonate)polyol and
poly(pentamethylenecarbonate)polyol, each carbonate having the following chemical structures.

Poly-$\epsilon$-caprolactonepolyol

$HO\{(CH_2)_5COO\}_nOH$

Poly(hexamethylenecarbonate)polyol

$HO\{(CH_2)_6OCO\}_nOH$

Poly(cyclohexamethylenecarbonate)polyol

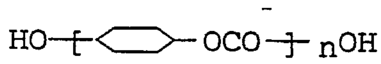

Poly(pentamethylenecarbonate)polyol

$HO\{(CH_2)_5OCO\}_nOH$

The resin shaped article of the present invention is molded or shaped by using melt extrusion molding of the above thermoplastic polyurethane resin or coating and baking of a resin solution prepared by dissolving the above thermoplastic polyurethane resin in a solvent such that the thickness of the polyurethane resin is 1.5 mm or less.

When the electrically insulating polyurethane resin shaped article is formed by a general-purpose polyurethane material using polyoxytetramethyleneglycol, poly(ethyleneadipate), poly(1,4-butyleneadipate), or poly(1,6-hexaneadipate) as a polyol component of the polyurethane, the above physical properties cannot be satisfied. For example, the molded product obtained by using the above general-purpose polyurethane resin is significantly degraded by Fron used as a refrigerant in a refrigerant resistance test and is therefore very unsuitable as a refrigerant-resistant coating material.

On the other hand, a degree of degradation caused by Fron is comparatively small in a shaped article obtained by using a polyurethane resin mainly consisting of poly-$\epsilon$-caprolactonepolyol and/or polycarbonatepolyol.

A polyurethane resin containing the above specific polyol component can become comparatively suitable as a coating material of a refrigerant-resistant insulated wire as one embodiment of the thermoplastic polyurethane resin shaped article according to the present invention by adjusting the shore hardness of the resin to be D50 to D83. This shore hardness is preferably obtained at a mixing ratio of 1 : 1.5 to 8 (molar ratio) of the chain extender with respect to the polyol component and at a mixing ratio of about 1 : 1.02 to 1.1 (molar ratio) of the diisocyanate compound with respect to a total amount of the polyol component and the chain extender. If the shore hardness of the polyurethane resin prepared by the above specific polyol starting component is D49 or less, no predetermined refrigerant resistance can be obtained. If the shore hardness of the resin is D76 to D83, when the resin is brought into contact with an epoxy-based varnish for impregnating a wire, it is cured to easily produce cracks in an insulating coating layer B. However, no cracks are produced when the resin is brought into contact with a polyester-based varnish. If the shore hardness of the polyurethane resin is D84 or more, cracks are easily produced in the insulating coating layer B even when the resin is brought into contact with the polyester-based varnish as well as the epoxy-based varnish.

To obtain an insulated wire having a high refrigerant resistance by extrusion coating the above specific resin or by coating and baking a solution of said resin, i.e., the thermoplastic polyurethane resin containing the specific polyol as a main component and having the above specific hardness, on the outer circumferential surface of a conductor A shown in Fig. 2A, the coating thickness of the insulating coating layer B is preferably 1.5 mm or less. If the thickness of the insulating coating layer B of the thermoplastic polyurethane resin exceeds 1.5 mm, Fron contained in the coating layer is not easily externally volatilized (to the outer air), thereby accelerating degradation in the coating layer. The lower limit of the coating thickness of the insulating coating layer is preferably 0.1 mm in view of the mechanical properties of the insulating coating layer. Both single wire and twisted wire can be used as the conductor of the insulating wire. A conductor obtained by twisting a fine wire is particularly preferable because a flexibility of the wire obtained is elevated.

In an electrically insulating resin tube 7 (Fig. 2B) as another embodiment of the present invention, a mixing ratio of the starting materials described above is adjusted such that the shore hardness of the polyurethane resin is D50 to D83, and particularly preferably, D50 to D80. The shore hardness of D50 to D80 is preferably obtained at a mixing ratio of 1 : 1.5 to 7.5 (molar ratio) of the chain extender with respect

to the polyol component and a mixing ratio of about 1 : 1.02 to 1.1 (molar ratio) of the diisocyanate compound with respect to a total amount of the polyol component and the chain extender. By adjusting the shore hardness of the thermoplastic polyurethane material containing the above specific polyol component to be D50 to D83, desired damage proof and heat resistance can be obtained. If the shore hardness is D49 or less, the damage proof and heat resistance are decreased. If the shore hardness is D81 or more, particularly, D84 or more, a flexibility is decreased. Therefore, a resin having a hardness falling outside the above range is unsuitable to coat a wire, e.g., a lead wire.

The wall thickness of the electrically insulating resin tube is 1.5 mm or less, and preferably, 0.1 to 0.7 mm. If the tube has a thickness larger than the above value, no satisfactory flexibility can be obtained even by using the specific polyurethane resin according to the present invention. In addition, if the thickness of the insulating tube exceeds 1.5 mm, Fron gas contained in the resin is not easily externally volatilized (to the outer air), thereby accelerating degradation in the tube caused by Fron gas. If the thickness is less than 0.1 mm, a damage resistance, a heat resistance, and a mechanical strength become unsatisfactory.

Note that an antioxidant, a filler, a flame retardant for giving a flame retardancy to the resin, a coloring agent such as a pigment or a dye for giving discrimination to the resin, and the like may be added in amounts not interfering with the effects of the present invention to the polyurethane resin according to the present invention by a conventional method in accordance with an application and necessity.

The electrically insulating polyurethane resin shaped article of the present invention is excellent in physical properties such as a damage proof, a flexibility, a heat resistance, a refrigerant resistance, and an oil resistance. When the resin shaped article is used in a refrigerant-resistant insulated wire, Fron used as a refrigerant can be easily volatilized, and the wire is degraded less by the refrigerant, i.e., has a high refrigerant resistance and is not adversely affected by a varnish.

The present invention will be described in more detail below by way of its examples and comparative examples. In the following examples and comparative examples, physical properties of the polyurethane resin shaped article were evaluated by test methods to be described below.

(a) To evaluate an oil resistance, a soxhlet test device was used with respect to 8 g of the resin shaped article, and special grade methylalcohol was used as a solvent and cooled under reflux at a reflux cycle of six to eight times/hour, thereby performing an extraction test for six hours to check an extraction rate. Note that a target value of the extraction rate was 1% or less.

(b) To evaluate a breakdown voltage, an insulated wire having a length of about 1 m was dried in a thermostat at 150°C for one hour and submerged in a liquid mixture liquefied at -60°C and prepared by mixing Fron R-22 and SUNISO 4GS manufactured by Sun Oil Company at a weight ratio of 8 : 2. In this state, the insulated wire was left to stand at an atmospheric temperature of 30°C for 24 hours. Thereafter, the insulated wire was removed from the liquid mixture and dried at 150°C for 10 minutes. After being dried, the resultant insulated wire was immediately wound around a metal rod having a diameter equal to a finished outer diameter of the wire such that turns of the wire have no gaps between them. An AC voltage of 50 Hz was applied across the metal rod and a conductor of the insulated wire to check a breakdown voltage. Note that a target value of the breakdown voltage was 10 kV or more.

(c) To evaluate varnish compatibility (A), two insulated wires 8 each having a length of about 30 cm were arranged parallel to each other, and upper, middle, and lower portions of the wires were bound by insulated wires 9 of the same type, as shown in Fig. 5. An epoxy-based impregnating varnish 10 was coated on the resultant structure and cured at 150°C for four hours to obtain a cured product of the varnish 11, and the binding insulated wires 9 were removed. The two insulated wires 8 bonded by the varnish were separated from their end portions and completely separated from each other, as shown in Fig. 5. The presence/absence of cracks produced during the separation in an insulating coating layer of each of the insulated wires was checked. Note that a target condition was that no abnormality was found in an outer appearance of the insulating coating layer.

(d) To evaluate varnish compatibility (B), a test was performed following the same procedures as in the varnish compatibility test (A) described above except that a polyester-based impregnating varnish requiring curing at 160°C for two hours was used in place of the epoxy-based impregnating varnish requiring curing at 150°C for four hours used in the varnish compatibility test (A).

In Tables 1 and 2 to be presented later, symbols have the following meanings.

Varnish compatibility:

- o No abnormality was found in an outer appearance of a wire (all wires OK for n = 3)
- x Crazes or cracks were found in a wire (coating layer) [all wires NG (No Good) for n = 3]
- Δ 1/3 or more of wires OK for n = 3

Total evaluation:

- o Good

x No Good
◎ Excellent

(e) A damage proof was evaluated by the following abrasion resistance test. That is, a load of 1.35 kg was applied on a blade having a hard-chromium-plated 0.125R edge consisting of steel, and the blade was reciprocated on an insulating tube sample coated on a magnet wire with a stroke of 10 mm and at a rate of 60 reciprocation times/min. The number of reciprocation times until the tube caused insulation breakdown was measured. The number of reciprocation times had to be 40 or more.

(f) A heat resistance was evaluated by the following heat resistance test. That is, an insulating tube sample coated on a magnet wire was wound around a rod having a diameter corresponding to its own diameter and put into an oven. The temperature was held at 150°C to measure a time elapsed until cracks were produced. A necessary value of the elapsed time was seven days or more until cracks was produced.

(g) A flexibility was evaluated by the following flexibility test. That is, one end portion of an insulating tube sample 12 coated on a magnet wire was fixed by a fixed end 13, as shown in Fig. 6, and a load required to bend the other end through 90° was measured by a tension meter. A necessary value was 20 g or less.

(h) A refrigerant resistance was evaluated by the following refrigerant resistance test. That is, an insulating tube sample coated on a 1-m long magnet wire was dried in a thermostat at 150°C for one hour and submerged in a liquid mixture liquefied at -60°C and prepared by mixing Fron R-22 and SUNISO 4GS at a weight ratio of 8 : 2. In this state, the sample was left to stand at 30°C for 24 hours. The resultant sample was removed from the liquid mixture and dried at 150°C for 10 minutes. After being dried, the sample was immediately wound around a metal rod having a diameter equal to the outer diameter of the sample so that turns of the wire had no gaps between them. An AC voltage of 50 Hz was applied across the metal rod and a conductor to measure a breakdown voltage. A necessary value was 10 kV or more.

Comparative Example 1

As Comparative Example 1 of the present invention, an insulating coating layer comprising a thermoplastic polyurethane resin, which contained only polyoxytetramethyleneglycol as a polyol component and was adjusted to have a shore hardness of D55, and having a coating thickness of 0.5 mm, as shown in Table 1, was formed on the outer circumferential surface of a conductor [0.75 sq.(30/0.18mm)] by extrusion molding, thereby obtaining an insulated wire. The obtained insulated wire was subjected to the above tests (a) to (d).

As shown in Table 1, the test results of the sample of Comparative Example 1 could not satisfy the respective target values. Therefore, total evaluation of the physical properties of the insulated wire obtained by Comparative Example 1 was determined to be "No Good", and symbol "x" was written in the total evaluation column on the right most side of Table 1.

Comparative Examples 2 - 20

As other Comparative Examples 2 to 20 of the present invention, thermoplastic polyurethane resins containing polyol components and adjusted to have a shore hardnesses as shown in Table 1 were used to obtain insulated wires having insulating coating layers having coating thicknesses as shown in Table 1, and the tests (a) to (d) were performed following the same procedures as in Comparative Example 1. The results are summarized in Table 1.

Examples 1 to 28

As Examples 1 to 28 of the present invention, thermoplastic polyurethane resins containing polyol components and adjusted to have a shore hardnesses as shown in Table 2 were used to obtain insulated wires having insulating coating layers having coating thicknesses as shown in Table 2, and the tests (a) to (d) were performed following the same procedures as in Comparative Example 1. The results are summarized in Table 2.

In table 2, symbol " ◎ " and "o" indicate "Excellent" and "Good" respectively in the total evaluation column.

As is apparent from Tables 1 and 2, in each of the insulated wires according to the present invention in which an insulating coating layer B comprising a thermoplastic polyurethane resin containing poly-ε-

caprolactonepolyol and/or polycarbonatepolyol as a polyol component and adjusted to have a shore hardness of D50 to D83 was extrusion-coated on the outer circumferential surface of a conductor A to have a coating thickness of 1.5 mm or less, the amount of a substance extracted by a refrigerant or the like from the insulating coating layer was small. In addition, a high insulation breakdown voltage was obtained when each wire was dipped in Freon and then heated. Furthermore, when each wire was brought into contact with a varnish, cracks in the insulating coating layer were not easily produced (not produced at all at a shore hardness of D75 or less). That is, each wire of the present invention was excellent as a refrigerant-resistant insulated wire. Of these insulated wires, particularly an insulated wire of an example using the polyurethane resin obtained by using poly(hexamethylenecarbonate)polyol alone as a polyol component had excellent properties.

Examples 29 - 50

In Example 29, the thermoplastic polyurethane resin containing only poly(hexamethylenecarbonate)-polyol as a polyol component and adjusted to have a shore hardness of D53 was used to form a resin tube 7 (Fig. 2B) having an inner diameter of 1.5 mm, an outer diameter of 2.5 mm, and a wall thickness of 0.5 mm as Example 29 according to the present invention. To evaluate physical properties of the tube, the tube was covered on a magnet wire having a finished outer diameter of 1.1 mm to form a sample, and the sample was subjected to the damage proof (abrasion resistance) test (e), the heat resistance test (f), the flexibility test (g), and the refrigerant resistance test (h) described above. The results are summarized in Table 3.

As shown in Table 3, the test results of the sample of Example 29 satisfied the respective necessary values. Therefore, total evaluation of the physical properties of the tube obtained by Example 29 was determined to be "Excellent" and "Good", and symbol "◎" and "o" was written respectively in the total evaluation column on the rightmost side of Table 3.

In Examples 30 to 50, the thermoplastic polyurethane resins containing polyol components and adjusted to have a shore hardnesses as shown in Table 3 were used to obtain a resin tubes having wall thicknesses as shown in Table 3. Various evaluation tests of the resin tubes were performed as in Example 29. The results are summarized in Table 3.

Comparative Examples 21 - 33

Following the same procedures as described above, samples of Comparative Examples 21 to 33 were prepared in accordance with Table 4 and tested. The results are summarized in Table 4. In the total evaluation column of Table 4, symbol "x" indicates "No Good", and symbol "Δ" indicates "Poor".

Table 1

| | Thermoplastic polyurethane material | | Wire structure | Characteristics | | | | |
|---|---|---|---|---|---|---|---|---|
| | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| Comparative Example 1 | Polyoxytetramethyleneglycol (100) | 55 | 0.5 | 5.3 | 2.5 | Δ | Not evaluated - | x |
| Comparative Example 2 | Poly (ethyleneadipate) (100) | 55 | 0.5 | 2.4 | 3.2 | Δ | - | x |
| Comparative Example 3 | Polyoxytetramethyleneglycol (50) Poly-ε-caprolactone (50) | 60 | 0.5 | 3.3 | 4.2 | Δ | - | x |
| Comparative Example 4 | Polyoxytetramethyleneglycol (50) Poly(hexamethylenecarbonate) (50) | 55 | 0.5 | 3.0 | 4.5 | Δ | - | x |

(Continued)

Table 1

| | Thermoplastic polyurethane material | | Wire structure | Characteristics | | | | |
|---|---|---|---|---|---|---|---|---|
| | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| Comparative Example 5 | Polyoxytetramethyleneglycol (50) Poly-ε-caprolactone (50) | 48 | 0.5 | 4.3 | 2.2 | o | - | x |
| Comparative Example 6 | ↑ (ditto) | ↑ | 0.3 | 4.3 | 2.7 | o | - | x |
| Comparative Example 7 | ↑ (ditto) | ↑ | 1.7 | 4.3 | 1.3 | o | - | x |
| Comparative Example 8 | Polyoxytetramethyleneglycol (20) Poly(hexamethylenecarboate)(80) | 60 | 0.5 | 2.0 | 5.8 | Δ | o | x |

(Continued)

Table 1

| | Thermoplastic polyurethane material | | Wire structure | Characteristics | | | | |
|---|---|---|---|---|---|---|---|---|
| | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| Comparative Example 9 | Polyoxytetramethyleneglycol (20) Poly(hexamethylenecarboate)(80) | 77 | 0.5 | 2.0 | 7.3 | x | Δ | x |
| Comparative Example 10 | Polyoxytetramethyleneglycol (20) Poly(hexamethylenecarboate)(80) | 77 | 0.3 | 2.0 | 10.2 | x | Δ | x |
| Comparative Example 11 | Polyoxytetramethyleneglycol (20) Poly(hexamethylenecarboate)(80) | 77 | 1.7 | 2.0 | 3.1 | x | Δ | x |
| Comparative Example 12 | Poly-ε-caprolactone (100) | 48 | 0.5 | 1.3 | 5.2 | o | o | x |

(Continued)

Table 1

| | Thermoplastic polyurethane material | | Wire structure | Characteristics | | | | |
|---|---|---|---|---|---|---|---|---|
| | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| Comparative Example 13 | Poly-ε-caprolactone (100) | 85 | 0.5 | 0.3 | 23.5 | x | x | x |
| Comparative Example 14 | ↑ (ditto) | 60 | 1.8 | 0.8 | 7.2 | o | o | x |
| Comparative Example 15 | Poly(hexamethylenecarbonate) (100) | 47 | 0.5 | 1.1 | 7.3 | o | o | x |
| Comparative Example 16 | ↑ (ditto) | 85 | 0.5 | 0.2 | 28.0 | x | x | x |
| Comparative Example 17 | ↑ (ditto) | 60 | 1.9 | 0.4 | 8.1 | o | o | x |

(Continued)

Table 1

| | Thermoplastic polyurethane material | | Wire structure | Characteristics | | | | |
|---|---|---|---|---|---|---|---|---|
| | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| Comparative Example 18 | Poly-ε-caprolactone (50) Poly(hexamethylenecarbonate) (50) | 48 | 0.4 | 1.2 | 6.8 | o | o | x |
| Comparative Example 19 | ↑ (ditto) | 85 | 0.8 | 0.2 | 26.3 | x | x | x |
| Comparative Example 20 | ↑ (ditto) | 60 | 2.1 | 0.5 | 7.7 | o | o | x |

Table 2

| | Thermoplastic polyurethane material | | Wire structure | Characteristics | | | | |
|---|---|---|---|---|---|---|---|---|
| | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| Example 1 | Poly(hexamethylenecarbonate) (100) | 53 | 0.5 | 0.8 | 13.8 | ○ | ○ | ◎ |
| Example 2 | ↑ (ditto) | ↑ | 1.0 | 0.8 | 11.7 | ○ | ○ | ◎ |
| Example 3 | ↑ (ditto) | 60 | 0.5 | 0.4 | 19.8 | ○ | ○ | ◎ |
| Example 4 | ↑ (ditto) | 74 | 0.5 | 0.3 | 21.5 | ○ | ○ | ◎ |
| Example 5 | ↑ (ditto) | ↑ | 1.0 | 0.3 | 20.0 | ○ | ○ | ◎ |
| Example 6 | Poly-ε-caprolactone (100) | 53 | 0.5 | 0.9 | 11.0 | ○ | - | ◎ |
| Example 7 | ↑ (ditto) | ↑ | 1.0 | 0.9 | 10.7 | ○ | - | ◎ |
| Example 8 | ↑ (ditto) | 64 | 0.5 | 0.4 | 14.8 | ○ | ○ | ◎ |

(Continued)

Table 2

| | Thermoplastic polyurethane material | | Wire structure | Characteristics | | | | |
|---|---|---|---|---|---|---|---|---|
| | Polyol component (ratio %) | Hardness (shore D) | Wall thick-ness (mm) | Extrac-tion rate (%) | Breakdown voltage (kV) | Varnish compati-bility (A) | Varnish compati-bility (B) | Total evalu-ation |
| Example 9 | Poly-ε-caprolactone (100) | 75 | 0.5 | 0.5 | 16.8 | o | o | ◎ |
| Example 10 | ↑ (ditto) | ↑ | 1.0 | 0.5 | 15.4 | o | o | ◎ |
| Example 11 | ↑ (ditto) | ↑ | 1.2 | 0.5 | 13.3 | o | o | ◎ |
| Example 12 | Poly-ε-caprolactone (50) Poly(hexamethy-lenecarbonate) (50) | 52 | 0.4 | 0.8 | 12.7 | o | o | ◎ |
| Example 13 | ↑ (ditto) | ↑ | 1.1 | 0.8 | 10.7 | o | o | ◎ |
| Example 14 | ↑ (ditto) | 63 | 0.4 | 0.5 | 17.2 | o | o | ◎ |
| Example 15 | ↑ (ditto) | 72 | 0.4 | 0.4 | 18.9 | o | o | ◎ |

(Continued)

Table 2

| | Thermoplastic polyurethane material | | Wire structure | Characteristics | | | | |
|---|---|---|---|---|---|---|---|---|
| | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| Example 16 | Poly-ε-caprolactone (50) Poly(hexamethylenecarbonate) (50) | 72 | 1.2 | 0.4 | 13.5 | ○ | ○ | ◎ |
| Example 17 | Poly(hexamethylenecarbonate) (80) Poly-ε-caprolactone (20) | 65 | 0.7 | 0.5 | 14.3 | ○ | ○ | ◎ |
| Example 18 | ↑ (ditto) | 50 | 0.4 | 0.7 | 13.3 | ○ | ○ | ◎ |
| Example 19 | Poly-ε-caprolactone (80) Poly(hexamethylenecarbonate) (20) | 61 | 0.4 | 0.6 | 13.8 | ○ | ○ | ◎ |
| Example 20 | ↑ (ditto) | 72 | 1.0 | 0.7 | 16.8 | ○ | ○ | ◎ |

(Continued)

Table 2

| | Thermoplastic polyurethane material | | Wire structure | Characteristics | | | | |
|---|---|---|---|---|---|---|---|---|
| | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| Example 21 | Poly-ε-caprolactone (100) | 78 | 0.5 | 0.5 | 17.3 | x | o | o |
| Example 22 | ↑ (ditto) | 82 | 0.5 | 0.3 | 20.5 | x | o | o |
| Example 23 | Poly(hexamethylenecarbonate) (100) | 78 | 0.5 | 0.3 | 22.0 | x | o | o |
| Example 24 | ↑ (ditto) | 82 | 0.5 | 0.2 | 27.3 | x | o | o |
| Example 25 | Poly-ε-caprolactone (50) Poly(hexamethylenecarbonate) (50) | 78 | 0.8 | 0.4 | 19.5 | x | o | o |
| Example 26 | ↑ (ditto) | 82 | 0.8 | 0.4 | 25.2 | x | o | o |

(Continued)

Table 2

| | Thermoplastic polyurethane material | | Wire structure | Characteristics | | | | |
|---|---|---|---|---|---|---|---|---|
| | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| Example 27 | Poly(pentamethylenecarbonate) (100) | 54 | 0.5 | 0.9 | 12.5 | ○ | ○ | ◎ |
| Example 28 | Poly(cyclohexamethylene-carbonate) (100) | 62 | 0.5 | 0.9 | 11.5 | ○ | ○ | ◎ |

Table 3

| Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 29 | Poly (hexamethylenecarbonate) (100) | 53 | 0.25 | 42 | 14 | 11 | 13.8 | ◎ |
| 30 | Poly (hexamethylenecarbonate) (100) | 53 | 0.5 | 48 | 14 | 15 | 11.7 | ◎ |
| 31 | Poly (hexamethylenecarbonate) (100) | 60 | 0.25 | 52 | 21 | 13 | 19.8 | ◎ |
| 32 | Poly (hexamethylenecarbonate) (100) | 78 | 0.25 | 53 | 18 | 15 | 21.5 | ◎ |
| 33 | Poly (hexamethylenecarbonate) (100) | 78 | 0.5 | 65 | 18 | 19 | 20.0 | ◎ |

(Continued)

Table 3

| Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 34 | Poly-ε-caprolactone (100) | 53 | 0.25 | 44 | 9 | 12 | 11.0 | ◎ |
| 35 | Poly-ε-caprolactone (100) | 55 | 0.8 | 67 | 9 | 19 | 10.7 | ○ |
| 36 | Poly-ε-caprolactone (100) | 64 | 0.25 | 55 | 10 | 14 | 14.8 | ◎ |
| 37 | Poly-ε-caprolactone (100) | 75 | 0.25 | 53 | 13 | 16 | 16.8 | ◎ |
| 38 | Poly-ε-caprolactone (100) | 75 | 0.5 | 66 | 13 | 19 | 15.4 | ◎ |
| 39 | Poly-ε-caprolactone (100) | 75 | 0.6 | 70 | 13 | 20 | 13.3 | ◎ |

(Continued)

Table 3

| Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 40 | Poly-ε-caprolactone (50) Poly (hexamethylenecarbonate) (50) | 52 | 0.2 | 43 | 12 | 12 | 12.7 | ◎ |
| 41 | Poly-ε-caprolactone (50) Poly (hexamethylenecarbonate) (50) | 51 | 1.0 | 73 | 12 | 19 | 10.7 | o |
| 42 | Poly-ε-caprolactone (50) Poly (hexamethylenecarbonate) (50) | 63 | 0.2 | 54 | 17 | 12 | 17.2 | ◎ |

(Continued)

Table 3

| Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 43 | Poly-ε-caprolactone (50)<br>Poly (hexamethylenecarbonate) (50) | 72 | 0.2 | 57 | 15 | 13 | 18.9 | ◎ |
| 44 | Poly-ε-caprolactone (50)<br>Poly (hexamethylenecarbonate) (50) | 72 | 0.6 | 58 | 15 | 18 | 13.5 | ◎ |
| 45 | Poly (hexamethylenecarbonate) (80)<br>Poly-ε-caprolactone (20) | 65 | 0.35 | 55 | 18 | 15 | 14.3 | ◎ |

(Continued)

Table 3

| Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 46 | Poly (hexamethylenecarbonate) (80) Poly-ε-caprolactone (20) | 52 | 1.2 | 75 | 17 | 19 | 13.3 | ○ |
| 47 | Poly (hexamethylenecarbonate) (20) Poly-ε-caprolactone (80) | 61 | 0.2 | 50 | 10 | 14 | 13.8 | ◎ |
| 48 | Poly (hexamethylenecarbonate) (20) Poly-ε-caprolactone (80) | 72 | 0.5 | 60 | 12 | 18 | 16.8 | ◎ |

Table 3

| Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 49 | Poly (pentamethylenecarbonate) (100) | 55 | 0.5 | 50 | 13 | 14 | 10.5 | ◎ |
| 50 | Poly (cyclohexamethylenecarbonate) (100) | 53 | 0.5 | 47 | 13 | 15 | 11.0 | ◎ |

Table 4

| Comparative Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 21 | Polyoxytetramethyleneglycol (100) | 55 | 0.5 | 15 | 3 | 15 | 2.5 | x |
| 22 | Poly (ethylene-adipate) (100) | 55 | 0.5 | 10 | 2 | 15 | 3.2 | x |
| 23 | Polyoxytetramethyleneglycol (50) Poly-ε-caprolactone (50) | 60 | 0.5 | 21 | 5 | 17 | 4.2 | x |
| 24 | Polyoxytetramethyleneglycol (50) Poly (hexamethylenecarbonate) (50) | 60 | 0.5 | 25 | 6 | 17 | 4.5 | x |

(Continued)

Table 4

| Comparative Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 25 | Poly-ε-caprolactone (100) | 45 | 0.5 | 30 | 15 | 7 | 5.2 | x |
| 26 | Poly-ε-caprolactone (100) | 85 | 0.5 | 60 | 35 | 40 | 17.3 | x |
| 27 | Poly-ε-caprolactone (100) | 60 | 1.7 | 78 | 25 | 25 | 7.2 | x |
| 28 | Poly (hexamethylenecarbonate) (100) | 45 | 0.5 | 35 | 15 | 10 | 7.3 | Δ |
| 29 | Poly (hexamethylenecarbonate) (100) | 85 | 0.5 | 65 | 35 | 35 | 22.0 | x |

(Continued)

Table 4

| Comparative Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 30 | Poly (hexamethylenecarbonate) (100) | 62 | 1.8 | 80 | 17 | 30 | 8.1 | x |
| 31 | Poly-ε-caprolactone (50) Poly (hexamethylenecarbonate) (50) | 48 | 0.55 | 32 | 10 | 8 | 6.8 | x |
| 32 | Poly-ε-caprolactone (50) Poly (hexamethylenecarbonate) (50) | 85 | 0.55 | 67 | 18 | 28 | 19.5 | x |

(Continued)

Table 4

| Comparative Example | Thermoplastic polyurethane material | | Tube structure | Characteristics | | | | |
|---|---|---|---|---|---|---|---|---|
| | Polyol component (ratio %) | Hardness (shore D) | Wall thickness (mm) | Abrasion resistance (times) | Heat resistance (days) | Flexibility (g) | Refrigerant resistance (kV) | Total evaluation |
| 33 | Poly-ε-caprolactone (50) Poly(hexamethylenecarbonate) (50) | 65 | 2.0 | 80 | 35 | 32 | 7.7 | x |

As is apparent from the test results shown in Tables 3 and 4, the tubes of Examples 29 to 50 according to the present invention satisfied necessary values in any of an abrasion resistance, a heat resistance, a flexibility, and a refrigerant resistance and therefore could be highly, totally evaluated in their physical properties. On the other hand, a sample of each Comparative Examples 21 to 33 different from the present invention in at least one or all of a polyol component, the hardness of a polyurethane resin, and the wall

thickness of a tube could not satisfy at least one or all of necessary values of its physical properties, i.e., an abrasion resistance, a heat resistance, a flexibility, and a refrigerant resistance.

Example 51

A mixture consisting of 100 g (0.05 mol) of poly(hexamethylenecarbonate)polyol, 31 g (0.34 mol) of 1,4-butane diol, 107.2 g (0.43 mol) of 4,4'-diphenylmethanediisocyanate and 560 g of N-methyl-2-pyrolidone was stirred within a reaction vessel. Sometime after the stirring, the temperature of the reaction system was elevated by the heat of reaction. When the temperature was elevated to reach about 80°C, the reaction system was gradually rendered viscous. Then, the reaction system was further heated for an hour to 120°C within an oil bath, and the reaction was carried out for 2 hours at this temperature. Further, 138 g of N-methyl-2-pyrolidone and 175 g of xylene were added to the reaction mixture for the dilution so as to obtain a resin solution.

A copper wire conductor having a diameter of 1.0 mm was coated with the resin solution, followed by baking the coating so as to obtain an insulated wire covered with a skin film 0.1 mm thick. Various properties of the insulated wire thus obtained were examined as in Example 1, with the results as shown in Table 5. Further, the insulated wire was elongated by 5% followed by withdrawing the conductor from the insulated wire so as to obtain a thermoplastic polyurethane resin tube. Various properties of the resultant resin tube are shown in Table 6. Incidentally, the symbols "o" and "◎" shown in Tables 5 and 6 are the same as defined previously.

Table 5

| Example | Shaped article | Thermoplastic polyurethane material | | Wire structure | Characteristics | | | | |
|---|---|---|---|---|---|---|---|---|---|
| | | Polyol component (ratio %) | Hardness (shore D) | Wall thickness (mm) | Extraction rate (%) | Breakdown voltage (kV) | Varnish compatibility (A) | Varnish compatibility (B) | Total evaluation |
| 51 | wire | Poly(hexamethylenecarbonate) (100) | 70 | 0.1 | 0.3 | 17.0 | o | o | ◎ |

Table 6

| Example | Shaped article | Thermoplastic polyurethane material | | Tube structure | Characteristics | | | | |
|---|---|---|---|---|---|---|---|---|---|
| | | Polyol component (ratio %) | Hardness (shore D) | Wall thickness (mm) | Abrasion resistance (times) | Heat resistance (days) | Flexibility (g) | Refrigerant resistance (kV) | Total evaluation |
| 51 | Tube | Poly(hexamethylene carbonate) (100) | 70 | 0.1 | 42 | 17 | 10 | 17.5 | ◎ |

As described above, the refrigerant-resistant insulated wire according to one embodiment of the polyurethane resin shaped article of the present invention has an insulating coating layer B having high refrigerant and oil resistances and is not adversely affected by a varnish for impregnating the wire. Therefore, this insulated wire can be used most suitably as a delivery wire of a refrigerant-resistant motor. In addition, in the insulated wire using the insulating coating layer B formed by extrusion coating, an end

treating process efficiency can be improved, and a manufacturing cost can be reduced.

Since the electrically insulating polyurethane resin tube according to another embodiment of the polyurethane resin shaped article of the present invention has excellent physical properties which satisfy all of characteristics required as a wiring insulating tube with a good balance, it can be used in a wide range of industrial applications. For example, the electrically insulating polyurethane resin tube according to the present invention can be used most suitably as an insulating protective coating and the like of a lead wire-corresponding portion of a magnet wire in a leadless wiring system of a magnet wire because of its excellent physical properties. As a result, practical application of the leadless wiring system can be facilitated.

## Claims

1. An electrically insulating polyurethane resin shaped article having excellent physical properties, obtained by shaping a thermoplastic polyurethane resin (B) such that a thickness of said resin is 1.5 mm to 0.1 mm, said thermoplastic polyurethane resin (B) having a shore hardness of D50 to D83 and being synthesized by using at least one member of a polyol selected from the group consisting of poly-$\epsilon$-caprolactonepolyol and polycarbonatepolyol, a chain extender, and a diisocyanate compound as starting materials.

2. An article according to claim 1, obtained by shaping said thermoplastic polyurethane resin (B) synthesized by using poly(hexamethylenecarbonate)polyol as a polycarbonatepolyol, 1,4-butanediol as a chain extender and 4,4'-diphenylemethanediisocyanate as a diisocyanate compound.

3. An article according to claim 1, shaped by extruding said thermoplastic polyurethane resin (B).

4. An article according to claim 1, shaped by coating and baking a resin solution of said thermoplastic polyurethane resin (B).

5. An article according to claim 1, characterized in that said article is a refrigerant-resistant insulated wire obtained by forming an insulating coating layer comprising said thermoplastic polyurethane resin (B) and having a thickness of 1.5 mm to 0.1 mm on an outer circumferential surface of a conductor (A).

6. An article according to claim 1, characterized in that said article is a refrigerant-resistant insulated resin tube (7) comprising a thermoplastic polyurethane resin (B), which has a shore hardness of D50 to D80, and having a wall thickness of 0.1 to 0.7 mm.

7. An article according to claim 5, characterized in that a twisted wire is used as a conductor (A) of said refrigerant-resistant insulated wire.

8. An article according to claim 5, characterized in that the insulating coating layer of said refrigerant-resistant insulated wire is colored for giving discrimination.

9. An article according to claim 6, characterized in that said refrigerant-resistant insulated resin tube (7) is colored for giving discrimination.

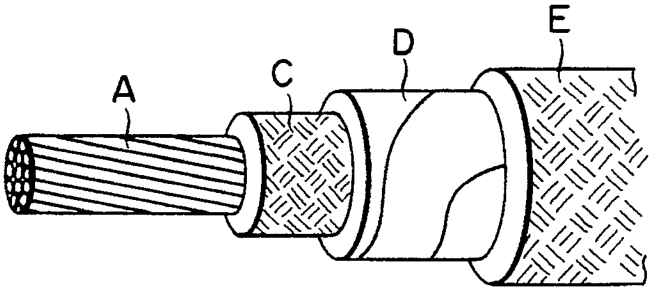


F I G. 1

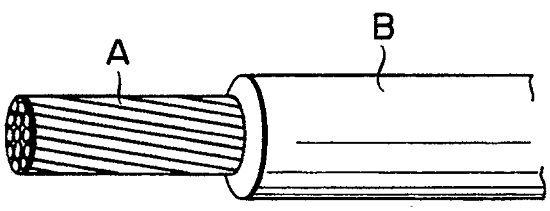


F I G. 2A

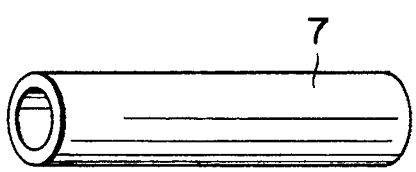


F I G. 2B

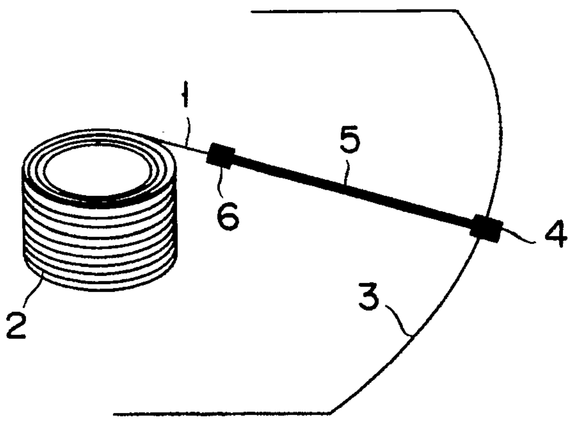


F I G. 3

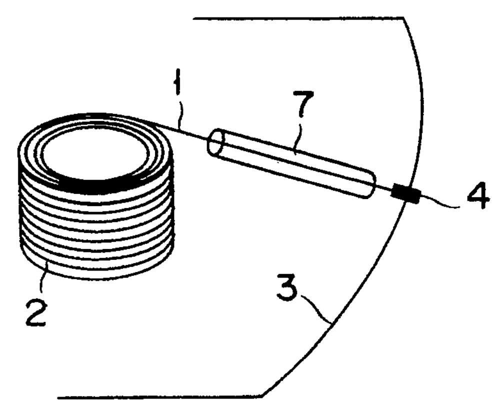


F I G. 4

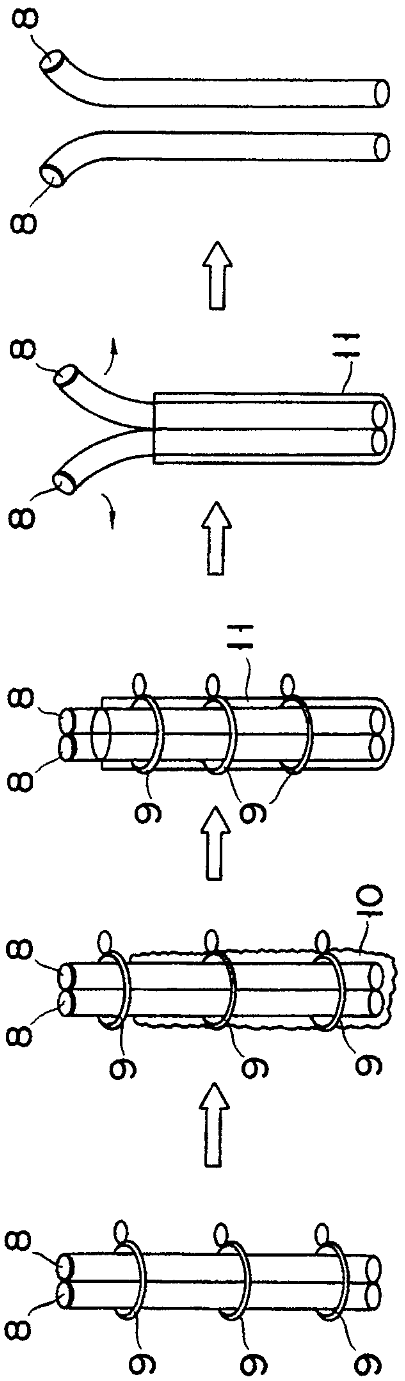


FIG. 5

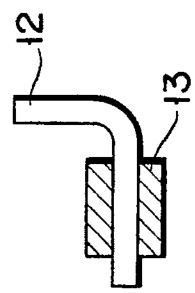


FIG. 6

European Patent Office

# EUROPEAN SEARCH REPORT

Application Number

EP 91108820.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X;Y | US - A - 4 886 848 (NISHIYAMA et al.) * Abstract; column 1, lines 39-45; column 2, lines 38-52; column 8, line 64 - column 9, line 16; examples 1-24,26; fig. 1 * -- | 1-3,5, 7,8;4, 6,9 | H 01 B 3/30 |
| Y | US - A - 3 067 063 (R. HALL et al.) * Column 1, lines 11-19; claim 1; fig. * | 4 | |
| A | * Column 1, lines 11-19; claim 1; fig. * -- | 5 | |
| Y | DD - A1 - 216 343 (VEB MIKROELEKTRONIK "BRUNO BAUM") * Abstract; example * ---- | 6,9 | |

TECHNICAL FIELDS SEARCHED (Int. Cl.5)

H 01 B 3/00

The present search report has been drawn up for all claims

| Place of search | Date of completion of the search | Examiner |
|---|---|---|
| VIENNA | 03-09-1991 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)